(19) Europäisches Patentamt
European Patent Office
Office européen des brevets

(11) Veröffentlichungsnummer: **0 018 567**
**B1**

# (12) EUROPÄISCHE PATENTSCHRIFT

(45) Veröffentlichungstag der Patentschrift: **16.06.82**

(51) Int. Cl.³: **C 10 L 1/24,** C 10 M 1/40, C 09 B 29/42, C 09 D 11/02

(21) Anmeldenummer: 80102129.6

(22) Anmeldetag: **21.04.80**

## (54) Verfahren zum Färben von Belagmassen, organischen Lösungsmitteln und Mineralölprodukten.

(30) Priorität: **27.04.79 DE 2917063**

(43) Veröffentlichungstag der Anmeldung: **12.11.80 Patentblatt 80/23**

(45) Bekanntmachung des Hinweises auf die Patenterteilung: **16.06.82 Patentblatt 82/24**

(84) Benannte Vertragsstaaten: **CH DE FR GB IT LI**

(56) Entgegenhaltungen:
**FR-A-1 498 170**
**FR-A-2 160 583**

(73) Patentinhaber: **BASF Aktiengesellschaft, Carl-Bosch-Strasse 38, D-6700 Ludwigshafen (DE)**

(72) Erfinder: **Lamm, Gunther, Dr., Heinrich-Heine-Strasse 7, D-6733 Hassloch (DE)**
Erfinder: **Dehnert, Johannes, Dr., Ottweiler Strasse 2, D-6700 Ludwigshafen (DE)**

EP 0 018 567 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zum Färben von Belagmassen, organischen Lösungsmitteln und Mineralölprodukten

Die Erfindung betrifft ein Verfahren zum Färben von Belagmassen, organischen Lösungsmitteln und Mineralölprodukten, das dadurch gekennzeichnet ist, dass man als Farbstoffe Verbindungen der allgemeinen Formel I

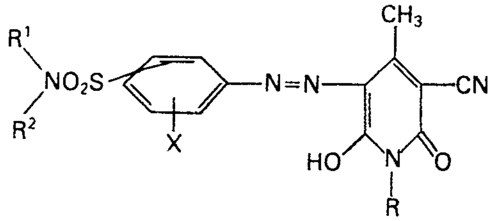

I,

verwendet, in der

R gegebenenfalls durch Sauerstoff unterbrochenes und gegebenenfalls durch Hydroxy oder Phenoxy substituiertes $C_1$- bis $C_{17}$-Alkyl oder Allyl,
$R^1$ Wasserstoff oder $C_1$- bis $C_8$-Alkyl,
$R^2$ $C_7$- bis $C_{10}$-Alkyl oder $(CH_2)_n(O\text{-alkylen})_mOT$ und
X Wasserstoff, Chlor, Brom, Methyl oder Methoxy sind, wobei
m die Zahlen 1, 2, 3 und 4,
n die Zahlen 2 oder 3,
T $C_1$- bis $C_4$-Alkyl oder Cyclohexyl und

alkylen einen Rest der Formel

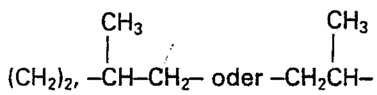

bedeuten.

Alkylreste R sind im einzelnen z.B. $CH_3$, $C_2H_5$, β-Äthylhexyl, n- oder i-Propyl, -Butyl, -Pentyl, -Hexyl, -Heptyl oder -Octyl.

Bevorzugt ist vor allem n-Butyl.

Sauerstoffhaltige Reste R sind insbesondere solche der allgemeinen Formel

$(CH_2)_n\ (O\text{-alkylen})_mOT$

in der

m die Zahlen 1, 2, 3 oder 4,
n die Zahlen 2 oder 3,
T Wasserstoff, $C_1$- bis $C_4$-Alkyl, Cyclohexyl, Benzyl, Phenyläthyl, Phenyl oder Tolyl sind und

alkylen den Formeln

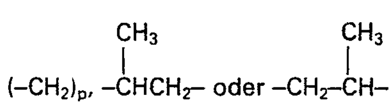

entspricht, wobei p 2, 4 oder 6 ist.

Einzelne Reste sind beispielsweise $C_2H_4OC_2H_4OH$, $(CH_2)_3O(CH_2)_4OH$, $(CH_2)_3O(CH_2)_6$-OH, $(CH_2)_3(OC_2H_4)_mOCH_3$ $(CH_2)_3(OC_2H_4)_mOC_2H_5$, $(CH_2)_3(OC_2H_4)_mOC_3H_7$ $(CH_2)_3(OC_2H_4)_mOC_4H_9$, $(CH_2)_3OC_2H_4OC_6H_5$ oder $(CH_2)_3(OC_3H_6)_mOCH_3$, wobei $C_3H_7$ und $C_4H_9$ die n-und i-Reste umfassen.

Für $R^1$ und $R^2$ sind im Rahmen der allgemeinen Definition die gleichen Reste sowie weiterhin Nonyl und Decyl zu nennen.

Bevorzugt für $R^1$ und $R^2$ sind Wasserstoff für einen der Reste und $C_7$- bis $C_{10}$-Alkyl für den anderen.

Bevorzugte sauerstoffhaltige Reste R, $R^1$ und $R^2$ sind wiederum im Rahmen der allgemeinen Definition die einzeln aufgeführten.

Von besonderer Bedeutung für das erfindungsgemässe Verfahren sind Verbindungen der Formel I a

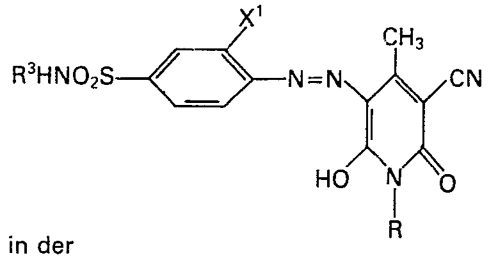

I a,

in der

$R^3$ $C_7$- bis $C_9$-Alkyl oder einen der einzeln aufgeführten sauerstoffhaltigen Reste und
$X^1$ Wasserstoff oder Methyl bedeuten und
R die angegebene Bedeutung hat.

Die Verbindungen der Formel I werden wie üblich durch Diazotierung eines Amins der allgemeinen Formel II

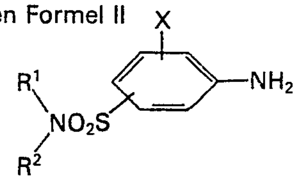

II

und Kupplung mit einem Pyridonderivat der Formel III

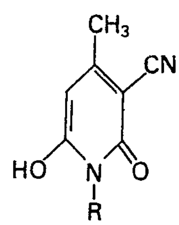

III

hergestellt.

Die Verbindungen der Formel I und weitere Verbindungen ähnlicher Struktur sind zum Teil als Dispersionsfarbstoffe insbesondere zum Färben von Polyesterfasern bekannt (vergl. z.B. DE-A-2 324 983 und FR-A-2 160 583).

Überraschenderweise wurde nun gefunden, dass sie auch zum Färben von Oberflächenbelägen, organischen Lösungsmitteln und Mineralölprodukten geeignet sind, weil sie sich durch eine unerwartet hohe Löslichkeit in diesen Medien auszeichnen. Einzelne Substrate, die mit den Verbindungen der Formel I gefärbt werden können, sind z.B. Druckfarben auf der Basis von aromatischen Kohlenwasserstoffen, wie Toluol oder Xylolen, Estern, Ketonen, Glykolen, Glykoläthern und Alkoholen, wie Essigsäureäthylester, Essigsäurebutylester, Essigsäuremethoxy-äthylester, Aceton, Methyläthylketon, Methylglykol, Methyldiglykol, Butyldiglykol, Äthanol, Propanol, Butanol, Phthalsäurebutylester oder Phthalsäureäthylhexlester oder Schreibtinten, Transparent-

lacke für den Flexodruck, Heiz- und Dieselöle sowie allgemein organische Lösungsmittel.

Für die Verwendung zusammen mit sauerstoffhaltigen Lösungsmitteln eignen sich vorwiegend die Verbindungen der Formel I mit sauerstoffhaltigen Resten R, $R^1$ und $R^2$.

In Druckfarben können die Verbindungen der Formel I die üblicherweise verwendeten Pigmente ersetzen, hierbei ergeben sich grosse Vorteile durch den Wegfall der bei Pigmenten notwendigen Finishoperationen und der Dispergierung. Die erzielbaren Echtheiten liegen auf mit den üblichen Pigmenten vergleichbarem Niveau.

In den folgenden Beispielen beziehen sich Angaben über Teile und Prozente, sofern nicht anders vermerkt, auf das Gewicht.

Beispiel 1

14.2 Teile der Diazokomponente der Formel

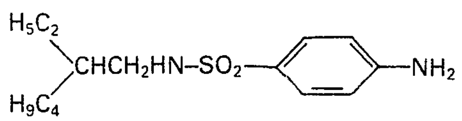

werden in 60 Raumteilen Dimethylformamid gelöst. Dann setzt man 2 Teile Türkischrotöl zu und verdünnt das Gemisch mit 18 Raumteilen konzentrierter Salzsäure, 200 Raumteilen Wasser und 100 Teilen Eis. Nach Zugabe von 16,5 Raumteilen einer 23%igen Natriumnitritlösung lässt man die Mischung 2 Stunden bei 8 bis 14° C rühren, zerstört danach überschüssige salpetrige Säure mit Amidosulfonsäure und puffert das Diazoniumsalzgemisch durch Zugabe von Natriumacetat auf pH 4,5 ab. In das Gemisch lässt man dann eine Lösung von 12,8 Teilen 1-(n)-Butyl-2-hydroxy-3-cyan-4-methylpyridon-6 in 200 Raumteilen Wasser und 5 Teilen 50%iger Natronlaufe einlaufen.

Die Kupplung ist bei pH 4,5–5,0 rasch beendet. Man isoliert den ausgefallenen gelben Farbstoff wie üblich, wäscht ihn mit Wasser salzfrei und trocknet. Man erhält 25 Teile eines gelben Pulvers der Formel

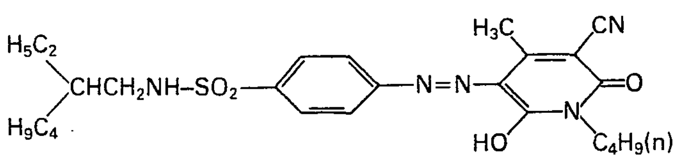

,

das sich in Toluol, Äthylalkohol und Methyläthylketon mit gelber Farbe löst.

Löst man 0,6 Teile des Farbstoffes in einem Gemisch aus 15 Teilen Collodiumwolle, 8 Teilen n-Butanol, 4 Teilen Phthalsäure-äthyl-hxylester, 4 Teilen Phthalsäuredibutylester, 35 Teilen Äthylglykol und 34 Teilen Toluol und bedruckt mit der erhaltenen Lösung weisses Papier, so erhält man nach dem Trocknen einen gelben Druck.

In gleicher Weise können die in den folgenden Tabellen durch Angabe der Substituenten gekennzeichneten Farbstoffe in der vorstehend genannten Art verwendet werden.

Beispiel 2

5 Teile des gelben Farbstoffes gemäss Beispiel 1 werden in einem Gemisch aus 85 Teilen Toluol und 10 Teilen eines Styrol-Maleinsäureester-Harzes gelöst. Man erhält so ein Gemisch, das als Tinte für Filzschreiber geeignet ist.

Beispiel 3

5 Teile des in Beispiel 1 genannten Farbstoffes werden in einem Gemisch aus 10 Teilen eines Styrol-Maleinsäureester-Harzes als Bindemittel, 65 Teilen Äthanol, 10 Teilen Propanol und 10 Teilen Äthylglykol gelöst. Man erhält so eine gelbe Tinte auf Alkohol-Basis für Schreibgeräte.

Beispiel 4

6 Teile des in Beispiel 1 genannten Farbstoffes werden in einem Gemisch aus 37 Teilen Äthylacetat, 37 Teilen Methyläthylketon und 20 Teilen eines Vinylchlorid-Vinylacetat-Copolymerisates (als Bindemittel) gelöst. Man erhält einen gelb gefärbten Lack, der Aluminiumfolie in grünstichig gelben Tönen belegt.

Beispiel 5

20 Teile des in Beispiel 1 genannten Farbstoffes werden in 80 Teilen Toluol gelöst. Anschliessend lässt man die konzentrierte, gelbbraune Lösung unter gutem Rühren in 4 000 000 Teile Heizöl ab, das auf diese Weise grünstichig gelb gekennzeichnet ist.

Tabelle 1

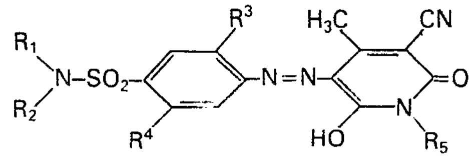

| Beispiel | $R_1$ | $R_2$ | $R_3$ | $R_4$ | $R_5$ | Farbton |
|---|---|---|---|---|---|---|
| 6 | H | $(CH_3)_2-CH(CH_2)_2-CH-$<br>\|<br>$CH_3$ | H | H | $C_4H_9(n)$ | grünstichig gelb |
| 7 | H | $(CH_3)_2-CH(CH_2)_2-CH-$<br>\|<br>$CH_3$ | $CH_3$ | H | $C_4H_9(n)$ | gelb |
| 8 | H | $CH_3(CH_2)_3-CH-CH_2CH_3$<br>\| | $CH_3$ | H | $C_4H_9(n)$ | gelb |
| 9 | H | $CH_3(CH_2)_3-CH-CH_2CH_3$<br>\| | $CH_3$ | H | $C_4H_9(n)$ | gelb |
| 10 | H | $(CH_3)_2CH-CH-CH(CH_3)_2$<br>\| | H | H | $C_4H_9(n)$ | grünstichig gelb |
| 11 | H | $(CH_3)_2CH-CH-CH(CH_3)_2$<br>\| | H | H | $C_4H_9(n)$ | grünstichig gelb |
| 12 | H | $CH_3-(CH_2)_7-$ | H | H | $C_4H_9(n)$ | grünstichig gelb |
| 13 | H | $CH_3-(CH_2)_7-$ | $CH_3$ | H | $C_4H_9(n)$ | gelb |
| 14 | H | $CH_3-(CH_2)_7-$ | H | H | $C_4H_9(n)$ | gelb |
| 15 | H | $CH_3-(CH_2)_7-$ | H | H | $C_3H_7(n)$ | gelb |
| 16 | H | $CH_3-(CH_2)_7-$ | $CH_3$ | H | $C_6H_{13}(n)$ | gelb |
| 17 | H | $CH_3-(CH_2)_7-$ | $CH_3$ | H | $CH_2CH=CH_2$ | gelb |
| 18 | H | $CH_3-(CH_2)_7-$ | H | H | $CH_2CH=CH_2$ | grünstichig gelb |
| 19 | H | $CH_3(CH_2)_3CH-CH_2-$<br>\|<br>$C_2H_5$ | H | H | $CH_2CH=CH_2$ | grünstichig gelb |
| 20 | H | $CH_3(CH_2)_3CH-CH_2-$<br>\|<br>$C_2H_5$ | $CH_3$ | H | $CH_2CH=CH_2$ | gelb |
| 21 | H | $CH_3(CH_2)_3CH-CH_2-$<br>\|<br>$C_2H_5$ | H | $CH_3$ | $CH_2CH=CH_2$ | gelb |
| 22 | H | $CH_3(CH_2)_3-CH-CH_2-$<br>\|<br>$C_2H_5$ | H | $CH_3$ | $C_3H_7(n)$ | gelb |
| 23 | H | $CH_3(CH_2)_3-CH-CH_2-$<br>\|<br>$C_2H_5$ | $C_2H_5$ | H | $C_3H_7(n)$ | gelb |
| 24 | H | $CH_3(CH_2)_3-CH-CH_2-$<br>\|<br>$C_2H_5$ | $C_2H_5$ | H | $C_4H_9(n)$ | gelb |
| 25 | H | $CH_3(CH_2)_3-CH-CH_2-$<br>\|<br>$C_2H_5$ | $CH_3$ | H | $C_4H_9(n)$ | gelb |
| 26 | H | $(CH_3)_2CH-(CH_2)_3CH-CH_3$<br>\| | $CH_3$ | H | $C_4H_9(n)$ | gelb |
| 27 | H | $(CH_3)_2CH-(CH_2)_3CH-CH_3$<br>\| | H | $CH_3$ | $C_4H_9(n)$ | gelb |
| 28 | H | $CH_3-(CH_2)_9-$ | $CH_3$ | H | $C_3H_7(i)$ | gelb |
| 29 | H | $CH_3-(CH_2)_9-$ | $CH_3$ | H | $CH_2-CH=CH_2$ | gelb |
| 30 | H | $CH_3-(CH_2)_9-$ | H | H | $C_3H_7(i)$ | grünstichig gelb |
| 31 | H | $CH_3-(CH_2)_9-$ | H | H | $C_4H_9(n)$ | grünstichig gelb |
| 32 | H | $CH_3-(CH_2)_9-$ | H | H | $C_4H_9(i)$ | grünstichig gelb |
| 33 | H | $CH_3(CH_2)_3CH-CH_2-$<br>\|<br>$C_2H_5$ | H | H | $C_4H_9(n)$ | gelb |
| 34 | H | $CH_3(CH_2)_7-$ | H | H | $C_4H_9(n)$ | gelb |

Tabelle 2

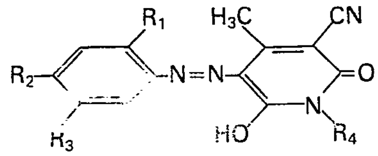

| Beispiel | $R_1$ | $R_2$ | $R_3$ | $R_4$ | Farbton |
|---|---|---|---|---|---|
| 35 | Cl | $SO_2NH-CH_2CH-C_4H_9(n)$<br>\|<br>$C_2H_5$ | H | $C_4H_9(n)$ | gelb |
| 36 | Br | $SO_2NH-CH_2CH-C_4H_9(n)$<br>\|<br>$C_2H_5$ | H | $C_4H_9(n)$ | gelb |
| 37 | Br | $SO_2NH-CH_2CH-C_4H_9(n)$<br>\|<br>$C_2H_5$ | H | $C_3H_7(n)$ | gelb |
| 38 | Br | $SO_2NH-CH_2CH-C_4H_9(n)$<br>\|<br>$C_2H_5$ | H | $CH_2CH=CH_2$ | gelb |
| 39 | Cl | $SO_2NH-CH_2CH-C_4H_9(n)$<br>\|<br>$C_2H_5$ | H | $CH_2CH=CH_2$ | gelb |
| 40 | H | H | $SO_2NH-CH_2CHC_4H_9(n)$<br>\|<br>$C_2H_5$ | $CH_2CH=CH_2$ | grüngelb |
| 41 | Cl | H | $SO_2NH-CH_2CHC_4H_9(n)$<br>\|<br>$C_2H_5$ | $CH_2CH=CH_2$ | grüngelb |
| 42 | Cl | H | $SO_2NH(CH_2)_9CH_3$ | $CH_2CH=CH_2$ | grüngelb |
| 43 | $OCH_3$ | $SO_2NH-CH_2CH-C_4H_9$<br>\|<br>$C_2H_5(n)$ | H | $C_4H_9(n)$ | gelb |

Die in der folgenden Tabelle aufgeführten Farbstoffe eignen sich insbesondere zur Herstellung alkoholischer Druckpasten.

Tabelle 3

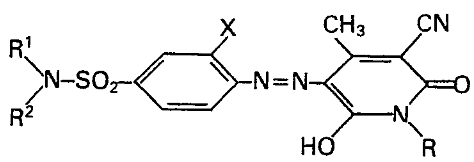

| Beispiel | $R^1$ | $R^2$ | X | R | Farbton |
|---|---|---|---|---|---|
| 45 | H | $CH_3(OCH_2CH_2)_2O(CH_2)_3$ | H | $(CH_2)_3O(CH_2)_4OH$ | gelb |
| 46 | H | $CH_3(OCH_2CH_2)_3O(CH_2)_3$ | H | $(CH_2)_3O(CH_2)_4OH$ | gelb |
| 47 | H | $C_2H_5OCH_2CH_2O(CH_2)_3$ | H | $(CH_2)_3O(CH_2)_4OH$ | gelb |
| 48 | H | $C_2H_5(OCH_2CH_2)_2O(CH_2)_3$ | H | $(CH_2)_3O(CH_2)_4OH$ | gelb |
| 49 | H | $C_2H_5(OCH_2CH_2)_2O(CH_2)_3$ | $CH_3$ | $(CH_2)_3O(CH_2)_4OH$ | gelb |
| 50 | H | $C_4H_9(OCH_2CH_2)_2O(CH_2)_3$ | H | $(CH_2)_3O(CH_2)_4OH$ | gelb |
| 51 | H | $CH_3(OCH_2CH_2)_2O(CH_2)_3$ | H | $(CH_2)_3O(CH_2)_2O-$ | gelb |
| 52 | H | $CH_3(OCH_2CH_2)_2O(CH_2)_3$ | H | $(CH_2)_3(OCH_2CH_2)_2OCH_3$ | gelb |
| 53 | H | $C_2H_5OCH_2CH_2O(CH_2)_3$ | H | $(CH_2)_3(OCH_2CH_2)_2OCH_3$ | gelb |
| 54 | H | $CH_3O(C_3H_6O)_2(CH_2)_3$ | H | $C_3H_6OCH_3$ | gelb |
| 55 | H | $C_2H_5OC_3H_6O(CH_2)_3$ | H | $C_3H_6OCH_3$ | gelb |

**Patentansprüche**

1. Verfahren zum Färben von Belagmassen, organischen Lösungsmitteln und Mineralölprodukten, dadurch gekennzeichnet, dass man als Farbstoffe Verbindungen der allgemeinen Formel

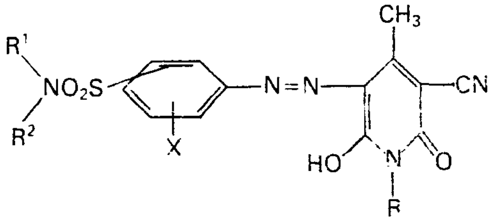

I,

verwendet, in der

R gegebenenfalls durch Sauerstoff unterbrochenes und gegebenenfalls durch Hydroxy oder Phenoxy substituiertes $C_1$- bis $C_{17}$-Alkyl oder Allyl,

$R^1$ Wasserstoff oder $C_1$- bis $C_8$-Alkyl,

$R^2$ $C_7$- bis $C_{10}$-Alkyl oder $(CH_2)_n(O\text{-alkylen})_mOT$ und

X Wasserstoff, Chlor, Brom, Methyl oder Methoxy sind, wobei

m die Zahlen 1, 2, 3 oder 4,

n die Zahlen 2 oder 3,

T $C_1$- bis $C_4$-Alkyl oder Cyclohexyl und

alkylen einen Rest der Formel

$(CH_2)_2$, $-CH(CH_3)-CH_2-$ oder $-CH_2CH(CH_3)-$

bedeuten.

2. Verfahren gemäss Anspruch 1, dadurch gekennzeichnet, dass man als Farbstoffe Verbindungen der allgemeinen Formel

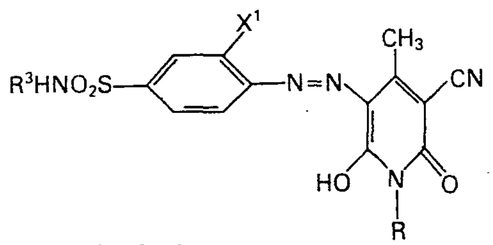

I a,

verwendet, in der

$R^3$ $C_7$- bis $C_9$-Alkyl und

$X^1$ Wasserstoff oder Methyl bedeuten und

R die angegebene Bedeutung hat.

**Claims**

1. A process for dyeing surface coatings, organic solvents and petroleum products, characterized in that the dye used is a compound of the general formula

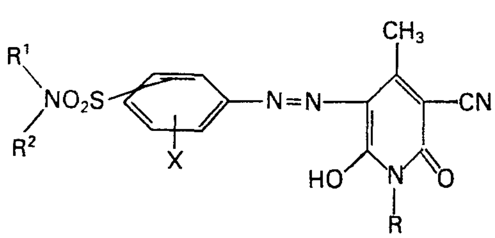

I,

where

R is $C_1$-$C_{17}$-alkyl, which may or may not be interrupted by oxygen and may or may not be substituted by hydroxyl or phenoxy, or is allyl,

$R^1$ is hydrogen or $C_1$-$C_8$-alkyl,

$R^2$ is $C_7$-$C_{10}$-alkyl or $(CH_2)_n(O\text{-alkylene})_mOT$

X is hydrogen, chlorine, bromine, methyl or methoxy,

m is 1, 2, 3 or 4,

n is 2 or 3,

T is $C_1$-$C_4$-alkyl or cyclohexyl, and

alkylene is

$(CH_2)_2$, $-CH(CH_3)-CH_2-$ or $-CH_2CH(CH_3)-$

2. A process as claimed in claim 1, characterized in that the dye used is a compound of the general formula

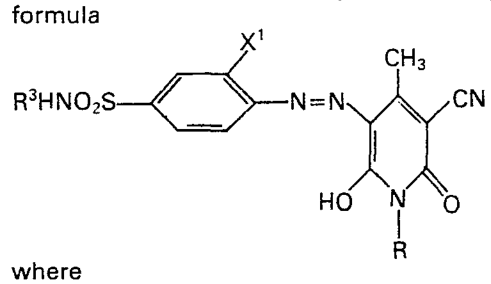

I a,

where

$R^3$ is $C_7$-$C_9$-alkyl,

$X^1$ is hydrogen or methyl and

R has the stated meanings.

**Revendications**

1. Procédé pour colorer des masses d'enduction, des solvants organiques et des produits à base d'huile minérale, caractérisé en ce que l'on utilise en tant que colorants des composés de formule générale

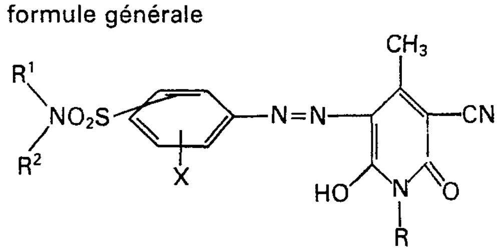

I,

dans laquelle

R représente un groupe alkyle en $C_1$–$C_{17}$ éventuellement interrompu par l'oxygène et éventuellement substitué par des groupes hydroxy ou phénoxy, ou un groupe allyle,

$R^1$ représente l'hydrogène ou un groupe alkyle en $C_1$–$C_8$,

$R^2$ représente un groupe alkyle en $C_7$–$C_{10}$ ou $(CH_2)_n(O\text{-alkylène})_mOT$ et

X représente l'hydrogène, le chlore, le brome, un groupe méthyle ou méthoxy,

m est égal à 1, 2, 3 ou 4,

n est égal à 2 ou 3,

T représente un groupe alkyle en $C_1$–$C_4$ ou cyclohexyle

et alkylène est un reste de formule

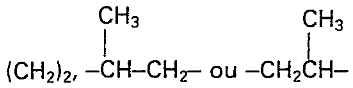

2. Procédé selon la revendication 1, caractérisé en ce que l'on utilise en tant que colorants des composés de formule générale

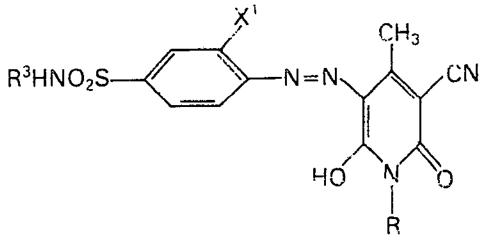

I a,

dans laquelle

$R^3$ représente un groupe alkyle en $C_7$–$C_9$ et

$X^1$ représente l'hydrogène ou le groupe méthyle et

R a la signification indiquée ci-dessus.